# EUROPÄISCHE PATENTSCHRIFT

(11) **EP 1 512 878 B1**
(45) Veröffentlichungstag und Bekanntmachung des Hinweises auf die Patenterteilung: **28.07.2010**
(21) Anmeldenummer: 04018900.3
(22) Anmeldetag: 10.08.2004
(51) Int. Cl.: F16C 29/02, F16C 29/04

(54) **Linearführung**
Linear bearing
Palier linéaire

(30) Priorität: 04.09.2003 DE 10340672
(43) Veröffentlichungstag der Anmeldung: 09.03.2005
(73) Patentinhaber: AB SKF, 415 50 Göteborg (SE)
(72) Erfinder: Velde, Henryk, 97440 Werneck (DE); Stahl, Erwin, 97714 Rottershausen (DE); Mayer, Uwe, 97702 Münnerstadt (DE)
(74) Vertreter: Kohl, Thomas

(56) Entgegenhaltungen:
- DE-A- 2 939 297
- DE-A- 3 429 692
- DE-A- 3 435 593
- DE-U- 7 333 605

## Beschreibung

Die Erfindung betrifft eine Linearführung gemäß dem Oberbegriff des Anspruchs 1.

Linearführungen sind z.B. aus der DE 29 39 297 A1 und aus der DE 34 35 593 A1 bekannt. Dort sind kombinierte Wälz- und Gleitlagerelemente beschrieben, d. h. Linearführungen, bei denen ein linear verschiebbarer Schlitten vorgesehen ist, der sich relativ zu einer ortsfesten Führungsschiene bewegen kann, wobei zu dessen Lagerung kombinierte Gleit- und Wälzlagerelemente eingesetzt werden. Die kombinierte Wälz- und Gleitführung wird dazu genutzt, die Verschiebebewegung auf die Gleitführung zu übertragen und damit das Gebiet der Festkörper- und Mischreibung in kurzer Zeit zu durchfahren, um somit Verschleiß entgegenzuwirken.

Die DE 73 33 605 U1 offenbart eine aerostatische Linearlagereinheit, die eine reibungsfreie Führung durch Aufbau eines Luftkissens erzeugt. Damit die Führung eine definierte Arbeitsposition hat, sind an der dem Luftkissen gegenüberliegenden Seite einer Führungsschiene Rollen angeordnet, die den Betrag definieren, um den ein Linearschlitten von der Führungsschiene nach Aufbau des Luftkissens abheben kann. Diese Rollen werden dabei mit einer vorgebbaren Kraft an ihre Laufbahn angedrückt, wodurch eine Vorspannung der aerostatischen Führungen bewirkt wird.

Die DE 29 39 297 A1 zeigt eine kombinierte Wälz- und Gleitführung, bei der sowohl Gleitbuchsen als auch Kugelbüchsen zum Einsatz kommen.

Aus der DE 34 29 692 A1 ist eine gattungsgemäße Linearführung, mit einem Führungselement für ein bewegtes Maschinenteil, bekannt, wobei ein Grundelement zusätzlich zu einer Rollführung eine Gleitführung aufweist, wobei die die Rollführung ermöglichenden Teile über die Gleitführung überstehend angeordnet sind. Mit dem Führungselement ist demnach bei normaler Belastung eine weiche, leichtgängige Rollführung und bei außergewöhnlichen Beanspruchungen eine steife Gleitführung wirksam.

Bei manchen Anwendungsfällen, insbesondere bei Crash-Tests im Fahrzeugbau, ist es erforderlich, einen Probekörper auf eine gewünschte Geschwindigkeit zu beschleunigen und anschließend sehr stark zu verzögern. Um Crash-Tests durchzuführen, wird der Probekörper zumeist bis auf ca. 80 km/h beschleunigt und anschließend mit ca. 40 g abgebremst. Die Linearschlitten werden dabei zumeist mit Keramik-Linear-Gleitlagern ausgestattet, die einen sehr großen Durchmesser aufweisen. Die eingangs genannten kombinierten Gleit- und Wälzführungen sind hierzu zumeist ungeeignet.

Nachteilig ist bei den vorbekannten Lagerungen zum genannten Anwendungszweck, dass insgesamt eine hohe Reibung und damit eine starke Wärmeentwicklung auftritt, wodurch ein nicht unerheblicher Verschleiß bedingt ist. Weiterhin sind undefinierte Reibungsverhältnisse gegeben, und das Betriebsspiel zur Sicherstellung der Funktion ist relativ groß. Infolgedessen weist der Linearschlitten einen ungenauen Bewegungsablauf auf, was zu Schwingungen führen kann und im übrigen einen sehr starken Antrieb erforderlich macht.

Im Lichte dieser Nachteile liegt der Erfindung die **Aufgabe** zugrunde, eine Linearführung der eingangs genannten Art so weiter zu entwickeln, dass sie insbesondere für solche Anwendungen einsatztauglich ist, bei denen sehr hohe Beschleunigungen bzw. Verzögerungen auf die Linearführung wirken. Dabei sollen die genannten Nachteile eliminiert werden.

Die **Lösung** dieser Aufgabe durch die Erfindung ist dadurch gekennzeichnet, dass das wälzgelagerte Linearlagerelement mittels eines Federelements am Schlitten angeordnet ist, das eine Bewegung des wälzgelagerten Linearlagerelements relativ zum Schlitten in eine zur Bewegungsrichtung der Linearführung senkrechte Richtung erlaubt.

Mit dieser Ausgestaltung wird es möglich, die Linearführung so zu betreiben, dass bei hohen Beschleunigungswerten, die auf die Linearführung bzw. auf deren Schlitten wirken, durch das Federelement die üblicherweise tragenden und führenden wälzgelagerten Linearlagerelemente auslenken können und die Führung im wesentlichen durch das Linear-Gleitlagerelement vorgenommen wird. Hierdurch kann die Führungsgenauigkeit bei niedriger Reibung und ohne nennenswerten Verschleiß im Normalbetrieb erhöht werden. Die wälzgelagerten Linearlagerelemente sind vor impulsartiger Belastung geschützt, d.h., wenn der Schlitten mit einer starken Beschleunigung oder Verzögerung beaufschlagt wird. In diesem Falle wird kurzzeitig die Last im wesentlichen vom Linear-Gleitlagerelement aufgenommen. Hierdurch ist es möglich, kleinere wälzgelagerte Linearlagerelemente einzusetzen als dies ohne den Erfindungsvorschlag möglich wäre.

Weiterbildungsgemäß kann vorgesehen sein, dass das Federelement so ausgelegt ist, dass bei für das wälzgelagerte Linearlagerelement unzulässig hohen Belastungen das Linear-Gleitlagerelement Last aufnimmt. Außerhalb dieser hohen Belastungen wird das Linear-Gleitlagerelement infolge seines erhöhten Spiels kontaktlos gehalten, so dass die Linearführung alleine durch das wälzgelagerte Linearlagerelement bewerkstelligt wird.

Als wälzgelagertes Linearlagerelement kommt bevorzugt eine Kugelbüchse zum Einsatz. Als Linear-Gleitlagerelement hat sich der Einsatz einer Gleitbuchse bewährt. Die Führungsschiene kann als Rundführung ausgebildet sein.

Gemäß einer weiteren Ausgestaltung ist vorgesehen, dass das Federelement als Tellerfeder ausgebildet ist. Alternativ dazu ist es auch möglich, dass das Federelement als im wesentlichen zylindrische Buchse ausgebildet ist, die im Querschnitt eine gewellte Form aufweist.

In der Zeichnung ist ein Ausführungsbeispiel der Erfindung dargestellt. Es zeigen:

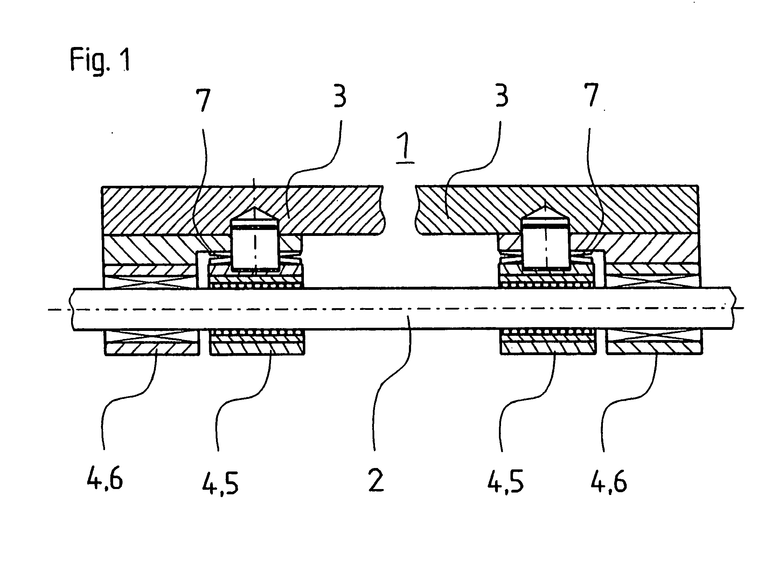

- Figur 1: im Längsschnitt eine Linearführung mit einem Schlitten, der mit einem kombinierten Wälzlager- und Gleitlagerelement geführt ist, und
- Figur 2: einen vergrößerten Ausschnitt der linken Figurenhälfte gemäß Figur 1.

In den Figuren ist eine Linearführung 1 zu sehen, die eine im Querschnitt kreisförmige Führungsschiene 2 aufweist, auf der ein Schlitten 3 linear verschieblich gelagert ist. Führungsschiene 2 und Schlitten 3 sind dabei Teile eines Lineartisches mit vier Lagerstellen, der beispielsweise für einen Crash-Test eingesetzt werden kann. Hierzu wird der Schlitten mit nicht dargestellten Antriebsmitteln auf eine gewünschte Geschwindigkeit beschleunigt und anschließend stark abgebremst.

Die Lagerung des Schlittens 3 auf der Führungsschiene 2 erfolgt durch Linearlager 4, die als kombinierte Wälz-Gleit-Lager ausgebildet sind. Hierzu sind wälzgelagerte Linearlagerelemente 5 und Linear-Gleitlagerelemente 6 vorgesehen. Jede Lagerstelle enthält jeweils eine Kombination eines wälzgelagerten Linearlagerelements 5 mit einem Linear-Gleitlagerelement 6.

Das wälzgelagerte Linearlagerelement 5 ist mit einem Federelement 7 in Form einer Tellerfeder mit dem Schlitten 3 verbunden. Dabei ist das Federelement 7 so angeordnet, dass das wälzgelagerte Linearlagerelement 5 relativ zum Schlitten 3 in eine zur Bewegungsrichtung der Linearführung senkrechte Richtung beweglich ist. Diese Bewegungsmöglichkeit erlaubt es, dass bei starken Belastungen, d.h. bei starker Beschleunigung oder starker Verzögerung des Schlittens 3 relativ zur Führungsschiene 2, eine Auslenkung des wälzgelagerten Linearlagerelements 5 so erfolgt, dass es nicht mehr alleinig die Führungskraft ausübt, sondern hierzu das Linear-Gleitlagerelement 6 herangezogen wird.

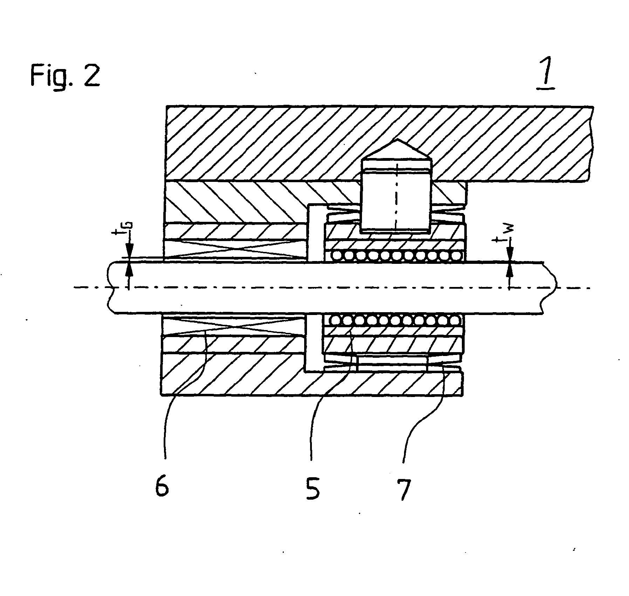

Wie es in Figur 2 gesehen werden kann, ist hierzu vorgesehen, dass das Spiel t_{G}, mit dem das Linear-Gleitlagerelement 6 die Führungsschiene 2 umfasst, größer ist als das Spiel t_{W}, das das wälzgelagerte Linearlagerelement 5 aufweist. Dies bedeutet, dass im Normalfall, also dann, wenn keine hohen Lastbedingungen vorliegen, die Führung des Schlittens 3 relativ zur Führungsschiene 2 alleinig durch die wälzgelagerten Linearlagerelemente 5 bewerkstelligt wird. Erst bei Auftreten einer erhöhten Lagerkraft infolge starker Beschleunigung oder Verzögerung lenken die wälzgelagerten Linearlagerelemente 5 aufgrund des Federelements 7 senkrecht zur Bewegungsrichtung aus, wodurch die Linear-Gleitlagerelemente 6 Führungskräfte aufnehmen.

Die Spielverhältnisse t_{G}, t_{W} sind also so gewählt, dass im Normalbetrieb lediglich die wälzgelagerten Linearlagerelemente 5 in Funktion sind; die Linear-Gleitlagerelemente 6 fahren in diesem Falle kontaktlos mit. Erst bei Erreichen einer für die wälzgelagerten Linearlagerelemente 5 unzulässig hohen Belastung kommen die Linear-Gleitlagerelemente 6 zum Tragen.

Die vorgeschlagenen Linearführungen kommen bevorzugt bei Sitzgurt-Testvorrichtungen in Crash-Test-Anlagen zum Einsatz sowie für ähnliche Anwendungsfälle. Generell sind derartige Linearführungen jedoch überall dort geeignet, wo sehr hohe Beschleunigungen oder Verzögerungen auftreten, in deren Folge die Tragzahl der wälzgelagerten Linearlagerelemente überschritten wird.

### Bezugszeichenliste

- 1: Linearführung
- 2: Führungsschiene
- 3: Schlitten
- 4: Linearlager
- 5: wälzgelagertes Linearlagerelement
- 6: Linear-Gleitlagerelement
- 7: Federelement

- t_{G}: Spiel
- t_{W}: Spiel

## Patentansprüche

1. Linearführung (1) mit mindestens einer ortsfesten Führungsschiene (2) und mindestens einem auf dieser linear verschiebbar angeordneten Schlitten (3), wobei zwischen Führungsschiene (2) und Schlitten (3) mindestens ein mit dem Schlitten (3) verbundenes Linearlager (4) angeordnet ist,
wobei das Linearlager (4) sowohl ein wälzgelagertes Linearlagerelement (5) als auch ein Linear-Gleitlagerelement (6) aufweist, die beide auf der Führungsschiene (2) linear bewegbar sind, und
wobei das Spiel (t_{G}), mit dem das Linear-Gleitlagerelement (6) die Führungsschiene (2) umfasst, größer ist als das Spiel (tw), das das wälzgelagerte Linearlagerelement (5) aufweist,
**dadurch gekennzeichnet,**
**dass** das wälzgelagerte Linearlagerelement (5) mittels eines Federelements (7) am Schlitten (3) angeordnet ist, das eine Bewegung des wälzgelagerten Linearlagerelements (5) relativ zum Schlitten (3) in eine zur Bewegungsrichtung der Linearführung (1) senkrechte Richtung erlaubt.

2. Linearführung nach Anspruch 1, **dadurch gekennzeichnet, dass** das wälzgelagerte Linearlagerelement (5) eine Kugelbüchse ist.

3. Linearführung nach einem der Ansprüche 1 oder 2, **dadurch gekennzeichnet, dass** das Linear-Gleitlagerelement (6) eine Gleitbuchse ist.

4. Linearführung nach einem der Ansprüche 1 bis 3, **dadurch gekennzeichnet, dass** die Führungsschiene (2) eine Rundführung ist.

5. Linearführung nach einem der Ansprüche 1 bis 4, **dadurch gekennzeichnet, dass** das Federelement (7) als Tellerfeder ausgebildet ist.

6. Linearführung nach einem der Ansprüche 1 bis 4, **dadurch gekennzeichnet, dass** das Federelement (7) als im wesentlichen zylindrische Buchse ausgebildet ist, die im Querschnitt eine gewellte Form aufweist.

## Claims

1. Linear guide (1) having at least one stationary guide rail (2) and at least one carriage (3) which is arranged such that it can be displaced linearly on the said at least one stationary guide rail (2), at least one linear bearing (4) which is connected to the carriage (3) being arranged between the guide rail (2) and the carriage (3), the linear bearing (4) having both a roller-mounted linear-bearing element (5) and a linear sliding-bearing element (6) which can both be moved linearly on the guide rail (2), and the play (t_{G}), with which the linear sliding-bearing element (6) clasps the guide rail (2), being greater than the play (t_{W}) which the roller-mounted linear-bearing element (5) has, **characterized in that** the roller-mounted linear-bearing element (5) is arranged on the carriage (3) by means of a spring element (7) which permits a movement of the roller-mounted linear-bearing element (5) relative to the carriage (3) in a perpendicular direction with respect to the movement direction of the linear guide (1).

2. Linear guide according to Claim 1, **characterized in that** the roller-mounted linear-bearing element (5) is a spherical bush.

3. Linear guide according to either of Claims 1 and 2, **characterized in that** the linear sliding-bearing element (6) is a sliding bush.

4. Linear guide according to one of Claims 1 to 3, **characterized in that** the guide rail (2) is a rotary guide.

5. Linear guide according to one of Claims 1 to 4, **characterized in that** the spring element (7) is configured as a disc spring.

6. Linear guide according to one of Claims 1 to 4, **characterized in that** the spring element (7) is configured as a substantially cylindrical bush which has an undulating shape in cross section.

## Revendications

1. Guide linéaire (1) doté d'au moins un rail de guidage (2) fixe et d'au moins un coulisseau (3) disposé de façon à pouvoir être déplacé de façon linéaire sur celui-ci, au moins un palier linéaire (4) relié au coulisseau (3) étant disposé entre le rail de guidage (2) et le coulisseau (3) ;
le palier linéaire (4) comportant tant un élément de palier linéaire (5) disposé à l'instar d'un rouleau qu'un élément de palier glissant linéaire (6) pouvant tous deux être déplacés de façon linéaire sur le rail de guidage (2) ; et
le jeu (t_{G}) avec lequel l'élément de palier glissant linéaire (6) ceint le rail de guidage (2) étant supérieur au jeu (t_{w}) de l'élément de palier linéaire (5) disposé à l'instar d'un rouleau ;
**caractérisé en ce que** l'élément de palier linéaire (5) disposé à l'instar d'un rouleau est disposé contre le coulisseau (3) à l'aide d'un élément de ressort (7), lequel permet un mouvement de l'élément de palier linéaire (5) disposé à l'instar d'un rouleau par rapport au coulisseau (3) dans une direction perpendiculaire à la direction de déplacement du guide linéaire (1).

2. Guide linéaire selon la revendication 1, **caractérisé en ce que** l'élément de palier linéaire (5) disposé à l'instar d'un rouleau est un coussinet sphérique.

3. Guide linéaire selon l'une quelconque des revendications 1 ou 2, **caractérisé en ce que** l'élément de palier glissant linéaire (6) est un coussinet coulissant.

4. Guide linéaire selon l'une quelconque des revendications 1 à 3, **caractérisé en ce que** le rail de guidage (2) est un rail arrondi.

5. Guide linéaire selon l'une quelconque des revendications 1 à 4, **caractérisé en ce que** l'élément de ressort (7) prend la forme d'un ressort Belleville.

6. Guide linéaire selon l'une quelconque des revendications 1 à 4, **caractérisé en ce que** l'élément de ressort (7) prend pour l'essentiel la forme d'un coussinet cylindrique prenant une forme ondulée en section transversale.
